## Europäisches Patentamt

## European Patent Office

## Office européen des brevets

(19)

(11) Veröffentlichungsnummer: **0 186 018**

**A2**

(12) # EUROPÄISCHE PATENTANMELDUNG

(21) Anmeldenummer: 85115576.2

(22) Anmeldetag: 07.12.85

(51) Int. Cl.⁴: **A 61 J 1/00**

(30) Priorität: 15.12.84 DE 8436840 U

(43) Veröffentlichungstag der Anmeldung:
02.07.86 Patentblatt 86/27

(84) Benannte Vertragsstaaten:
BE DE FR GB IT NL

(71) Anmelder: Biotest Pharma GmbH
Flughafenstrasse 4
D-6000 Frankfurt 71(DE)

(72) Erfinder: Walker, Wolfram H., Dr. Dipl.-Chem.
Thomastrasse 8
D-6074 Rödermark(DE)

(72) Erfinder: Netz, Manfred
Carl-Schutz-Strasse 16
D-6070 Langen(DE)

(72) Erfinder: Gänshirt, Karlheinz, Dr. Dipl.-Chem.
August-Bebel-Strasse 34
D-6072 Dreieich(DE)

(74) Vertreter: Beil, Hans Christoph, Dr. et al,
Beil, Wolff und Beil Rechtsanwälte Adelonstrasse 58
D-6230 Frankfurt am Main 80(DE)

(54) **Beutelvorrichtung für die Aufbewahrung von Blut und Blutbestandteilen.**

(57) Die vorliegende Erfindung betrifft eine Beutelvorrichtung für die Aufbewahrung von Blut und Blutbestandteilen, insbesondere Vollblut, Erythrozytenkonzentrat und Thrombozytenkonzentrat, enthaltend einen Beutel, einen Einleitungsschlauch, einen Überleitungsschlauch und mindestens einen Einstechstutzen, wobei die Beutelwandung aus einer mit Dioctylphthalat weichgemachten Polyvinylchloridfolie besteht, die dadurch gekennzeichnet ist, daß die Dicke der Beutelwandung im Bereich von 0,2 bis 0,35 mm, die Oberfläche der Beutelwandung im Bereich von 400 bis 800 cm² und der Weichmacheranteil der Beutelwandung im Bereich von 35 bis 50 Gew.-% derart aufeinander abgestimmt sind, daß der Beutel eine Gasdurchlässigkeit von mindestens 800 cm³ $O_2$ und mindestens 4000 cm³ $CO_2$ pro Tag/m²/bar aufweist.

0186018

Unsere Nr. 24 968

Biotest Pharma GmbH
Flughafenstraße 4
6000 Frankfurt 71

Beutelvorrichtung für die Aufbewahrung von
Blut und Blutbestandteilen

Die vorliegende Erfindung betrifft eine Beutelvorrichtung
für die Aufbewahrung von Blut und Blutbestandteilen, insbesondere Vollblut, Erythrozytenkonzentrat und
Thrombozytenkonzentrat, enthaltend einen Beutel, einen Einleitungsschlauch, einen
Überleitungsschlauch und mindestens einen Einstechstutzen,
wobei die Beutelwandung aus einer mit Dioctylphthalat weichgemachten Polyvinylchloridfolie besteht, die dadurch
gekennzeichnet ist, daß die Dicke der Beutelwandung im
Bereich von 0,2 bis 0,35 mm, die Oberfläche der Beutelwandung im Bereich von 400 bis 800 cm² und der Weichmacheranteil der Beutelwandung im Bereich von 35 bis 50 Gew.-%
derart aufeinander abgestimmt sind, daß der Beutel eine
Gasdurchlässigkeit von mindestens 800 cm³ $O_2$ und mindestens 4000 cm³ $CO_2$ pro Tag/m²/bar aufweist.

An derartige Beutelvorrichtungen werden im allgemeinen folgende Anforderungen gestellt: die Beutel müssen transparent und flexibel sein, sie müssen mit wäßriger Blutstabilisatorflüssigkeit gefüllt dampfsterilisierbar sein oder leer mit Ethylenoxid oder Strahlen sterilisierbar sein. Außerdem muß der Kunststoff, aus dem solche Beutel üblicherweise hergestellt werden, blutverträglich sein, darf keine das Blut oder den Patienten schädigende Substanzen abgeben, darf keine Substanzen aus dem Blut eliminieren, darf das Gerinnungssystem des Blutes nicht beeinflussen, darf keinen nachteiligen Einfluß auf die plasmatischen und zellulären Substanzen des Blutes wie Erythrozyten, Thrombozyten und Leukozyten haben und muß gegen das Eindringen von Mikroorganismen dicht sein.

Man hat bisher Beutel für die vorstehend genannten Zwecke überwiegend aus weichmacherhaltigen Polyvinylchloridfolien hergestellt. . Weich-Polyvinylchlorid zeigt günstige Eigenschaften wie Durchsichtigkeit und leichte Verarbeitbarkeit. Als Weichmacher wurde in erster Linie Dioctylphthalat verwendet, und zwar in einem Weichmacheranteil von 30 bis 40 Gew.-%. Die Foliendicke betrug üblicherweise 0,35 bis 0,4 mm.

Aus der DE-OS 29 43 178 bzw. der US-PS 4 222 379 ist bekannt, daß sich solche Blutbeutel aus mit Dioctylphthalat weichgemachtem Polyvinylchlorid insbesondere zur Lagerung von Vollblut und Erythrozytenkonzentrat eignen, weil das Dioctylphthalat zu einer Verminderung des Plasmahämoglobins und somit zur Verminderung einer Hämolyse von Erythrozyten bei der Lagerung im Blutbeutel führt.

Aus der EP-A 00 26 912 bzw. der US-PS 4 280 497 ist ein Blutbeutel zur Aufbewahrung von Thrombozytenkonzentraten bekannt, dessen Wände aus weichem Polyvinylchlorid bestehen, das 30 bis 50 % Tri-2-ethyl- hexyltrimellitat als Weichmacher und zusätzlich 3 bis 5 % epoxidierte pflanzliche Öle zur Hitzestabili- sierung enthält. Mit einem solchen Beutel wurde aufgrund einer günstigen hohen Gasdurchlässigkeit eine günstige Thrombozyten-in-vivo-Überlebensrate gefunden. Ein solcher Effekt wurde mit einem bisherigen Blutbeutel, der aus einer üblichen, mit Dioctylphthalat weichgemachten Polyvinylchloridfolie bestand, nicht erzielt, so daß dieser bisherige Blutbeutel nicht für die Lagerung von Thrombozytenkonzentraten geeignet war.

Aus der EP-A 00 26 912 sowie aus der Literatur ist bekannt, daß nur Beutel mit extrem großer Oberfläche, aus extrem dünnem Folienmaterial oder bei Verwendung von mit Trimellitat-Weichmachern weichgemachten Polyvinyl- chloridfolien eine ausreichende Gasdurchlässigkeit zeigen.

Für die Lagerung von Erythrozytenkonzentraten ist jedoch wegen einer höheren Hämolyserate eine Folie mit Trimellitat-Weichmacher nicht geeignet.

Andererseits ist die Aufbewahrung von Erythrozyten- und Thrombozytenkonzentraten in Behältnissen mit wesentlich vergrößerter Beuteloberfläche wegen der Handhabung und der ungünstig vergrößerten Fremdkontaktflächen nicht wünschenswert. Weiterhin ist eine wesentliche Verringerung der Wandstärke der Beutel nicht möglich, da sonst Probleme bei der Zentrifugation entstehen und die mechanische Stabilität nicht gegeben ist.

Der Erfindung liegt die Aufgabe zugrunde, eine Beutelvorrichtung bereitzustellen, die sich sowohl für die Lagerung von Vollblut und Erythrozytenkonzentraten für eine Dauer von mindestens 4 Wochen bei 4 - 6°C als auch zur Lagerung von Thrombozytenkonzentraten für eine Dauer von mindestens 5 Tagen bei 22 bis 25°C (Raumtemperatur) sowie für die Zentrifugation eignet und die auch die noch für die praktische Handhabung mögliche Stärke und Oberfläche der Beutelwandung besitzt.

Diese Aufgabe wird erfindungsgemäß bei einer Beutelvorrichtung für die Aufbewahrung von Blut und Blutbestandteilen, enthaltend einen Beutel, einen Einleitungsschlauch, einen Überleitungsschlauch und mindestens einen Einstechstutzen, wobei die Beutelwandung aus einer mit Dioctylphthalat weichgemachten Polyvinylchloridfolie besteht, dadurch gelöst, daß die Stärke der Beutelwandung im Bereich von 0,2 bis 0,35 mm, die Oberfläche der Beutelwandung im Bereich von 400 bis 800 cm² und der Weichmacheranteil der Beutelwandung im Bereich von 35 bis 50 Gew.-% derart aufeinander abgestimmt sind, daß der Beutel eine Gasdurchlässigkeit von mindestens 800 cm³ $O_2$ und mindestens 4000 cm³ $CO_2$ pro Tag/m²/bar aufweist.

Überraschenderweise war es möglich, eine Beutelvorrichtung zu entwickeln, deren Beutel sich sowohl zur Aufbewahrung von Erythrozytenkonzentraten und Vollbluten als auch von Thrombozytenkonzentraten entsprechend den vorstehenden Kriterien eignet, die normale Beutelgröße zur Aufbewahrung von 300 bis 500 ml Blut aufweist, sich zur Zentrifugation eignet und aus einem Folienmaterial aus mit Dioctylphthalat weichgemachtem Polyvinylchlorid besteht.

In der erfindungsgemäßen Beutelvorrichtung ermöglicht das Vorhandensein von Dioctylphthalat als Weichmacher in der Polyvinylchloridfolie der Beutelwandung die Lagerung von mit Blutstabilisatorlösungen (die z.B. Citrat, Phosphat, Dextrose und Adenin enthalten können) stabilisiertem Vollblut und Erythrozytenkonzentraten für eine Dauer von mindestens 4 Wochen oder sogar bis zu 7 Wochen bei einer für die Anwendung zulässigen Hämolyse. Andererseits ermöglicht die Gasdurchlässigkeit des Beutels eine Lagerung von Thrombozytenkonzentraten für eine Dauer von mindestens 5 Tagen in diesem Beutel.

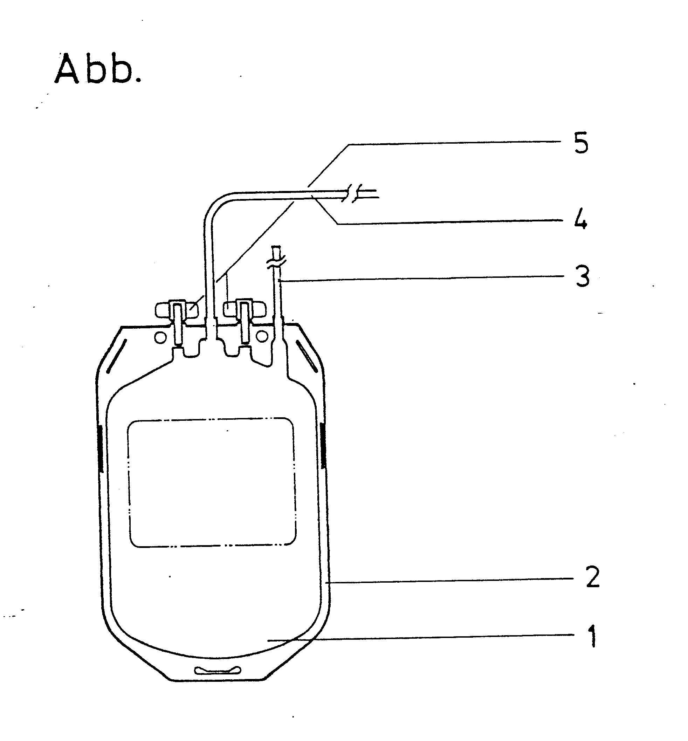

Die erfindungsgemäße Beutelvorrichtung wird durch die Zeichnung näher erläutert.
Die Abb. zeigt eine Vorderansicht der Beutelvorrichtung im Schnitt. Sie besteht aus dem Beutel (1) mit der Beutelwandung (2) und aus dem Einleitungsschlauch (3), dem Überleitungsschlauch (4) und mindestens einem Einstechstutzen (5). Erfindungsgemäß weist der Beutel (1) eine Gasdurchlässigkeit von mindestens 800 $cm^3$ $O_2$ und mindestens 4000 $m^3$ $CO_2$ pro Tag/$m^2$/bar auf. Vorzugsweise beträgt diese Gasdurchlässigkeit 800 bis 1600 $cm^3$ $O_2$ und 4000 bis 8000 $cm^3$ $CO_2$ pro Tag/$m^2$/bar.

Die Gasdurchlässigkeit des Beutels ist abhängig von der Dicke der Beutelwandung (2), der Oberfläche der Beutelwandung (2), worunter die Summe von Vorder- und Rückseite zu verstehen ist, und dem Weichmacheranteil der Beutelwandung (2). Überraschenderweise wurde gefunden, daß die Gasdurchlässigkeit des Beutels bei unveränderter Dicke und Oberfläche der Beutelwandung mit dem Weichmacheranteil der Beutelwandung, d.h.

dem Anteil an Dioctylphthalat in der Polyvinylchloridfolie ansteigt. Andererseits ist die Gasdurchlässigkeit
umso geringer, je dicker die Beutelwandung und je geringer die Oberfläche der Beutelwandung ist.

Die vorstehenden drei die Gasdurchlässigkeit des Beutels
bestimmenden Parameter sind erfindungsgemäß innerhalb
der folgenden Bereiche auf die gewünschte Gasdurchlässigkeit für eine Blutkonserve, für ein Erythrozytenkonzentrat bzw.
das daraus hergestellte Thrombozytenkonzentrat abgestimmt:

Stärke der Beutelwandung: 0,2 bis 0,35 mm
Oberfläche der Beutelwandung: 400 bis 800 $cm^2$
Weichmacheranteil: 35 bis 50 Gew.-%.

Vorzugsweise weist die Beutelwandung eine Dicke von 0,3 mm
und eine Oberfläche von 450 bis 625 $cm^2$ auf.

Die erfindungsgemäße Beutelvorrichtung kann über die
Verbindungsschläuche (3) und/oder (4) mit einem oder
zwei und über diese mit weiteren Beuteln verbunden werden. Die weiteren Beutel können aus dem gleichen oder
einem anderen Folienmaterial bestehen und von gleicher
oder anderer üblicher Bauart sein. Wenn ein weiterer
Beutel für die Lagerung von Erythrozytenkonzentrat oder
von Thrombozytenkonzentrat bestimmt ist, sollte er dem
erfindungsgemäßen Beutel entsprechen.

Die erfindungsgemäße Beutelvorrichtung kann auch für die
Aufbewahrung anderer Blutpräparate bzw. Komponenten
eingesetzt werden.

## Beispiele

In der nachfolgenden Tabelle I werden die Parameter und Eigenschaften von zwei erfindungsgemäßen Beutelvorrichtungen als Beutel von Beispiel 1 und Beispiel 2 mit den Parametern und Eigenschaften von zwei bekannten Beuteln A und B verglichen. Die Beutel der Beispiele 1 und 2 enthalten wie der bekannte Beutel A in der Polyvinylchloridfolie der Beutelwandung Dioctylphthalat (DOP) als Weichmacher, während der bekannte Thrombozytenbeutel B als Weichmacher in der Polyvinylchloridfolie der Beutelwandung Tri-2-ethylhexyltrimellitat (TOTM) enthält.

TABELLE I

Eigenschaften bekannter und neuerungsgemäßer Blutbeutel

| | bekannter Blutbeutel A | bekannter Thrombozyten-beutel B | Beutel von Beispiel 1 | Beutel von Bei-spiel 2 |
|---|---|---|---|---|
| Weichmacher | DOP | TOTM | DOP | DOP |
| Weichmacheranteil (Gew.%) | 30 | 35 | 40 | 50 |
| Oberfläche $(cm^2)$ | 580 | 580 | 580 | 625 |
| Beutelfüllvolumen (ml) | 450 | 450 | 450 | 500 |
| Dicke (mm) | 0,35 | 0,35 | 0,3 | 0,2 |
| Relative Zunahme der Hämolyse nach 5-wöchiger Lagerung | 4 | 8 | 4 | 4 |
| $O_2$-Durchlässigkeit $(\dfrac{cm^3}{Tag \times m^2 \times bar})$ | < 800 | 800 | 900 | 1600 |
| $CO_2$-Durchlässigkeit | < 4000 | 4000 | 4500 | 8000 |
| pH-Wert des Thrombo-zytenkonzentrats nach einer Lagerung von 5/7 Tagen | 6,0/5,5 | 7,0/6,5 | 7,1/6,8 | 7,1/7,0 |

Aus den vorstehenden Daten ist ersichtlich, daß die Beutel der Beispiele 1 und 2 sowohl für die Aufbewahrung von Vollblut und Erythrozytenkonzentraten für eine Dauer von 5 Wochen als auch für die Aufbewahrung von Thrombozytenkonzentraten für eine Dauer von 5 bis mindestens 7 Tagen geeignet sind. Demgegenüber eignet sich der Beutel A nicht für die Aufbewahrung von Thrombozytenkonzentraten, wie aus dem verringerten pH-Wert ersichtlich ist, während sich der Beutel B nicht für die Aufbewahrung von Vollblut und Erythrozytenkonzentraten eignet, wie aus der erhöhten Zunahme der Hämolyse ersichtlich ist.

Die Vorteile der erfindungsgemäßen Beutelvorrichtung für die Lagerung von Vollblut bzw. Erythrozytenkonzentraten geht außerdem aus Tabelle II hervor. In dieser Tabelle werden am Beispiel von Vollblut anhand eines bekannten Blutbeutels A und des Beutels von Beispiel 1 die Sauerstoff- und Kohlendioxid-Partialdrucke des gelagerten Blutes verglichen. Der bekannte Blutbeutel A und der Beutel von Beispiel 1 in Tabelle II entsprechen den Beuteln in Tabelle I.

Aus Tabelle II geht hervor, daß sich der Sauerstoff-Partialdruck des Blutes für den bekannten Blutbeutel von 40,4 auf 97,7 mmHg nach 21 Tagen erhöht, für den Beutel von Beispiel 1 jedoch für dasselbe Blut von 41,3 auf 207,5, d.h. mehr um das Doppelte erhöht.

Die verbesserte Gasdurchlässigkeit der Folie von Beispiel 1 ist auch aus der Veränderung des Kohlendioxid-Partialdruckes ersichtlich. Durch die verbesserte

Diffusion von $CO_2$ aus dem Blut bzw. Blutbeutel von Beispiel 1 senkt sich der $pO_2$ um ca. 30 %, wohingegen er im bekannten Blutbeutel A nahezu konstant bleibt bzw. sogar leicht zunimmt.

Der Beutel von Beispiel 1 zeigt gegenüber dem bekannten Blutbeutel A entscheidende Vorteile derart, daß das im Beutel von Beispiel 1 gelagerte Blut kohlendioxidärmer und sauerstoffreicher und somit sauerstoffbeladener ist.

## Tabelle II

### $O_2$- und $CO_2$-Partialdrucke von gelagertem Vollblut

|  | bekannter Blutbeutel A | Beutel von Beispiel 1 |
|---|---|---|
| $pO_2$ (1 Tag) | 40,4+/-7,5 | 41,3+/-8,4 (mmHg) |
| (21 Tage) | 97,7+/-30 | 207,5+/-11 (mmHg) |
| $pCO_2$ (1 Tag) | 106,0+/-9,2 | 103,6+/-8,61 (mmHg) |
| (21 Tage) | 118,3+/-10,1 | 70,2+/-8,7 (mmHg) |

CPDA-1 Vollblut nach 1 bzw. 21 Tagen Lagerung bei 4-6°C.

Bestimmung von $pO_2$ und $pCO_2$ nach:

Ole Sigaard-Andersen " The Acid-Base Status of the Blood" 4. revision, Munksgaard Copenhagen 1976 ISBN Nr.: 87 16 01567 3 mittels:

Combi-Analysator MT 3, Fa. Eschweiler & Co., Kiel.

Patentansprüche

1.    Beutelvorrichtung für die Aufbewahrung von Blut und
Blutbestandteilen, insbesondere Vollblut, Erythrozytenkonzentrat und Thrombozytenkonzentrat, enthaltend einen
Beutel,einen Einleitungsschlauch, einen Überleitungsschlauch
und mindestens einen Einstechstutzen, wobei die
Beutelwandung aus einer mit Dioctylphthalat weichgemachten Polyvinylchloridfolie besteht,
dadurch gekennzeichnet, daß die Dicke der Beutelwandung im Bereich von 0,2 bis 0,35 mm, die Oberfläche der Beutelwandung im Bereich von 400 bis
800 cm² und der Weichmacheranteil der Beutelwandung
im Bereich von 35 bis 50 Gew.-% derart aufeinander
abgestimmt sind, daß der Beutel eine Gasdurchlässigkeit von mindestens 800 cm³ $O_2$ und mindestens
4000 cm³ $CO_2$ pro Tag/m²/bar aufweist.

2. Beutelvorrichtung nach Anspruch 1, dadurch gekennzeichnet, daß der Beutel eine Gasdurchlässigkeit
von 800 bis 1600 cm³ $O_2$ und 4000 bis 8000 cm³ $CO_2$
pro Tag/m²/bar aufweist.

3. Beutelvorrichtung nach Anspruch 1 oder 2, dadurch
gekennzeichnet, daß die Beutelwandung eine Dicke von
0,3 mm aufweist.

4. Beutelvorrichtung nach einem der Ansprüche 1 bis 3,
dadurch gekennzeichnet, daß der Beutel eine Gasdurchlässigkeit von 900 cm³ $O_2$ und 4 500 cm³ $CO_2$
pro Tag/m²/bar aufweist.

5. Beutelvorrichtung nach einem der Ansprüche 1 bis 4, dadurch gekennzeichnet, daß die Beutelwandung eine Oberfläche von 450 bis 625 cm² aufweist.

Abb.